# EUROPÄISCHE PATENTANMELDUNG

(11) **EP 0 949 189 A2**
(43) Veröffentlichungstag der Anmeldung: **13.10.1999**
(21) Anmeldenummer: 99106717.4
(22) Anmeldetag: 01.04.1999
(51) Int. Cl.: B66F 9/075

(54) **Stapler mit Rückwärtsgang**

(30) Priorität: 03.04.1998 DE 19815124
(71) Anmelder: STILL GMBH, D-22113 Hamburg (DE)
(72) Erfinder: Frisch, Bert, 21502 Geesthacht (DE)
(74) Vertreter: Kasseckert, Rainer

(57) **Zusammenfassung**

Die Erfindung betrifft einen Gabelstapler mit einer nach hinten gerichteten Kamera (16) und einem vor dem Fahrer angeordneten Bildschirm (18) zur Darstellung des von der Kamera (16) erzeugten Bildes. Dies erspart dem Fahrer das Umdrehen beim Rückwärtsfahren.

## Beschreibung

Die Erfindung betrifft ein Flurförderzeug, insbesondere einen Stapler mit Rückwärtsgang. Bisher dreht sich der Fahrer zum Rückwärtsfahren um, oder er blickt in den/die Rückspiegel. Ersteres beansprucht bei häufiger Wiederholung, die im Staplerbetrieb zwangsläufig auftritt, die Wirbelsäule; die zweite Alternative läßt "tote Winkel" übrig, die vom Fahrer nicht eingesehen werden können, was ab und zu zu Unfällen führt.

Bei einer speziellen Bauart von Staplern ist der Fahrersitz daher quer zur Fahrtrichtung angeordnet (insbesondere bei Schubmaststaplern oder "reach-trucks"), was zu einer gleich guten Übersicht nach vorne wie nach hinten führt. Jedoch ist diese Sitzposition gewöhnungsbedürftig, da der Fahrer beim Fahren immer den Kopf verdrehen muß.

Aufgabe der Erfindung ist es daher, ein Flurförderzeug vorzuschlagen, bei dem das Rückwärtsfahren ohne wesentliche Verdrehung des Kopfes und mit guter Sicht nach hinten erfolgen kann.

Diese Aufgabe wird erfindungsgemäß gelöst von einem Flurförderzeug mit einer oder mehreren nach hinten gerichteten Kameras und einem oder mehreren vor dem Fahrer angeordneten Bildschirmen zur Darstellung des von der Kamera erzeugten Bildes. Erfindungsgemäß ist also an der Hinterseite des Staplers, z.B. in einem der Rücklichter oder in der hinteren Glasscheibe mindestens eine Kamera vorgesehen, die das Blickfeld hinter dem Stapler aufnimmt und auf einen Bildschirm überträgt, der im Sichtbereich des Fahrers angeordnet ist, wenn der Fahrer in normaler Fahrposition mit Blick nach vorne im Fahrzeug sitzt. Der oder die Bildschirme können also irgendwo in der Nähe der Armaturen angeordnet sein, direkt vor der Windschutzscheibe (in Fahrersicht gesehen) oder - in einer bevorzugten Ausführungsform - ein virtueller Bildschirm sein, der ähnlich einem Headupdisplay ausgebildet ist und das Bild von der Umgebung hinter dem Fahrzeug in die Frontscheibe des Fahrers überträgt. Die dazu notwendige Technik ist z.B. über LCD-Bildschirme bereits vorhanden.

Dieser virtuelle Bildschirm hat den Vorteil, daß er sehr groß ausgelegt sein kann und so ein großes Blickfeld hinter dem Fahrer mit hoher Auflösung und Detailtreue erstellt. Der Bildschirm kann bevorzugt einfach bei Einlegung des Rückwärtsganges (z.B. durch Bedienen des entsprechenden Hebels am Joystick) aktiviert werden und taucht dann innerhalb der Frontscheibe auf, die zuvor an dieser Stelle noch voll durchsichtig war. Der Fahrer hat dann ein Bild der Umgebung hinter dem Stapler direkt vor sich und kann das Rückwärtsfahren ohne Verdrehen des Kopfes nach ganz hinten oder zu den Spiegeln, die normalerweise an der Außenkontur des Fahrzeugs angeordnet sind, durchführen.

In einer weiteren Ausführungsform ist vorgesehen, daß beim Einlegen des Rückwärtsganges auch die Wirkung der Lenkung invertiert wird. Der Fahrer kann dann also beim Rückwärtsfahren praktisch so lenken, wie er - bei einem Videospiel am Bildschirm - vorwärts fahren würde.

Bei der Erfindung ist es vorteilhaft, daß der Blick nach hinten ohne Störungen und tote Winkel erfolgt, da die Kamera so angeordnet werden kann, daß keine störenden Objekte in ihrem Blickfeld liegen. Möglich ist es auch, zwei oder mehr Kameras anzuordnen, zwischen deren Bildern der Fahrer dann wechseln kann. So ist es z.B. möglich, eine Kamera relativ hoch oben anzuordnen, wodurch der Fahrer einen besseren Überblick nach hinten erhält. Ebenso kann eine Kamera im unteren Bereich des Fahrzeugs angeordnet sein und dem Fahrer ein exaktes Bild aus der Höhe der Stoßstange oder des Gegengewichts geben, wodurch der Fahrer beim Rangieren in engen Gängen sehr unterstützt wird.

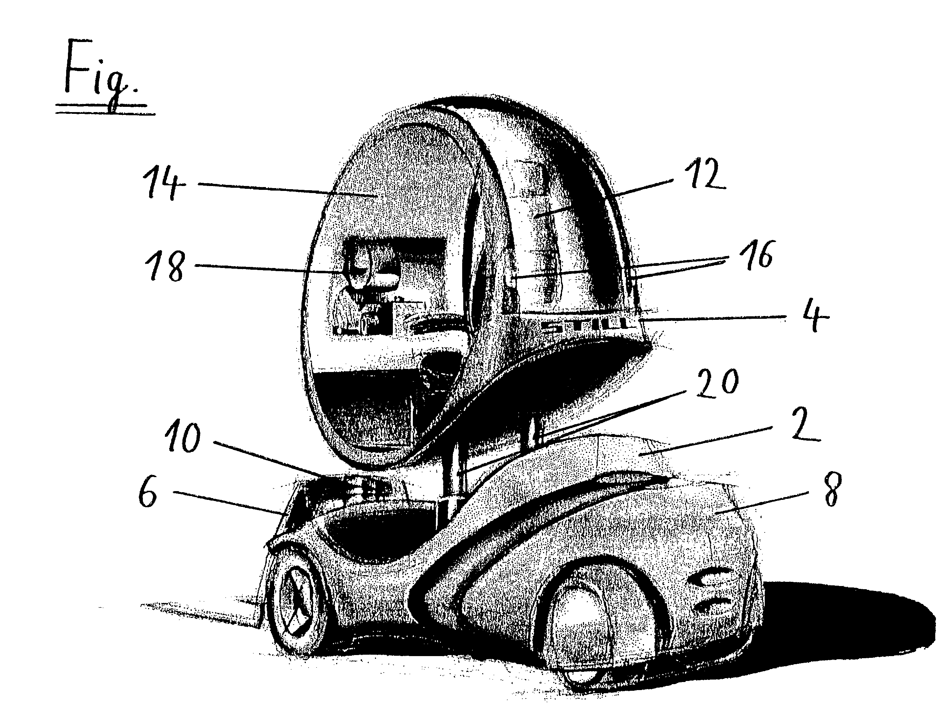

Weitere Vorteile, Merkmale und Ausgestaltungen der Erfindung ergeben sich nachfolgend aus einer Beschreibung einer Ausführung anhand der einzigen Zeichnung.

Die einzige Figur zeigt eine Ausführung eines erfindungsgemäßen Staplers mit dem Rahmen 2, der Kabine 4, dem Hubgerüst 6 und dem Gegengewicht 8. Das Hubgerüst 6 ist hier mit dem Teleskopzylinder 10 ausgerüstet. Innerhalb der Kabine 4 befindet sich der Fahrersitz 12, der, wie heute üblich, auf der linken Armlehne ein kleines Lenkrad enthält und auf der rechten Armlehne einen Joystick für die Staplerfunktionen und die Wahl der Fahrtrichtung. In dieser Ausführung hat die Kabine 4 eine Frontscheibe 14 und zwei Kameras 16, die nach hinten gerichtet sind und die dem Fahrer auf einem Bildschirm 18, der in der Frontscheibe 14 integriert werden kann, ein Bild von der Umgebung hinter dem Stapler projizieren kann. Die Kabine 4 ist in dieser Ausführung über zwei Hubzylinder 20 vom Rahmen 2 anhebbar.

Wie in der Figur zu erkennen ist, sind in dieser Ausführung zwei Kameras 16 in die Rücklichter im Rahmen der Kabine 4 integriert. Der Bildschirm 18 ist als LCD-Bildschirm ausgebildet, der in die Frontscheibe 14 eingespielt wird und dort ein detailgetreues Bild der Region hinter dem Fahrzeug zeigt. Der Fahrer muß seinen Kopf nicht mehr verdrehen - auch nicht zu seitlich angeordneten Seitenspiegeln - und erhält trotzdem ein vollständiges Bild des Bereiches hinter seinem Fahrzeug.

## Patentansprüche

1. Flurförderzeug, insbesondere Gabelstapler mit Rückwärtsgang, **gekennzeichnet durch** eine nach hinten gerichtete Kamera (16) und einen vor dem Fahrer angeordneten Bildschirm (18) zur Darstellung des von der Kamera (16) erzeugten Bildes.

2. Flurförderzeug nach Anspruch 1, **dadurch gekennzeichnet,** daß der Bildschirm (18) ein virtueller Bildschirm wie ein Headupdisplay oder ein LCD-Bildschirm in der Frontscheibe (14) ist.

3. Flurförderzeug nach einem der vorhergehenden Ansprüche, **dadurch gekennzeichnet,** daß der Bildschirm (18) beim Einlegen des Rückwärtsganges aktiviert wird.

4. Flurförderzeug nach einem der vorhergehenden Ansprüche, **dadurch gekennzeichnet,** daß die Lenkung beim Einlegen des Rückwärtsganges in ihrer Wirkung invertiert ist.
